# EUROPÄISCHE PATENTSCHRIFT

(11) **EP 0 440 624 B1**
(45) Veröffentlichungstag und Bekanntmachung des Hinweises auf die Patenterteilung: **24.01.1996**
(21) Anmeldenummer: 89904622.1
(22) Anmeldetag: 24.04.1989
(51) Int. Cl.: G01S 13/78, G01S 13/28

(54) **VERFAHREN ZUR VERARBEITUNG VON GESENDETEN UND REFLEKTIERTEN SIGNALEN UND ZUR STÖRSIGNALUNTERDRÜCKUNG DER GESUCHTEN SIGNALE**
METHOD FOR PROCESSING TRANSMITTED AND REFLECTED SIGNALS FOR REMOVING UNWANTED SIGNALS AND NOISE FROM WANTED SIGNALS
PROCEDE DE TRAITEMENT DE SIGNAUX TRANSMIS ET REFLECHIS EXCLUANT LES SIGNAUX ET LE BRUIT INDESIRABLES DES SIGNAUX VOULUS

(30) Priorität: 27.10.1988 NO 884784
(43) Veröffentlichungstag der Anmeldung: 14.08.1991
(73) Patentinhaber: MICRO DESIGN A.S., N-7580 Selbu (NO)
(72) Erfinder: KIRKNES, Steffen, N-7580 Selbu (NO)
(74) Vertreter: Hennig, Peter
(86) Internationale Anmeldenummer: NO8900034
(87) Internationale Veröffentlichungsnummer: WO9004794

(56) Entgegenhaltungen:
- GB-A- 1 605 271
- US-A- 3 663 935
- US-A- 3 706 094
- US-A- 4 297 700

## Beschreibung

Die Erfindung betrifft ein Verfahren zum Behandeln von Signalen in einem Identifikationssystem, wie es in der Einleitung zu Patentanspruch 1 beschrieben ist.

Die Erfindung ist vorgesehen für die Anwendung in einem Identifiktionssystem, welches aus einem Sender, einem mobilen, binär kodierten passiven, die Identifikation liefernden Antwortsendegerät (Transponder) und einer Empfängereinheit besteht, die in der Kombination ein Behandlungssystem darstellen.

Der Transponder kann mit Mitteln der SAW(Surface Acoustic Wave)-Technologie verwirklicht werden. Transponder nach dieser Technologie haben viele Vorteile für eine derartige Anwendung; sie sind nicht teuer, einfach herzustellen und erfordern keine Wartung, und sie sind unabhängig von äußeren Energiequellen usw. Jedoch hat ein Transpoder entsprechend dieser Technologie eine Charakteristik, die einen grundsätzlichen Nachteil hat: Die hohe Einfügungsdämpfung. Dies bedeutet, daß das reflektierte Rücksignal schwach ist im Verhältnis zum hereinkommenden Abfrageimpuls. Dieser Nachteil wird dadurch verstärkt, daß die Sendeeinheit ein schwaches Ausgangsradar benutzt, um den Abstrahlerfordernissen bei der benutzten Frequenz gerecht zu werden.

Zusammenfassend ist das Resultat derart, daß die Stärke des erwünschten Rücksignals an die Empfängereinheit des Systems sehr gering ist im Verhältnis zu den unerwünschten Signalen, zum Rauschen und zum Eigenrauschen des Empfängers selbst.

### Andere bekannte Lösungen

Das traditionelle Verfahren zum behandeln von Signalen zur Verbesserung des Signal/Rausch-Verhältnisses für die erwähnten Anwendungen besteht darin, das reflektierte Signal direkt mittels A/D(Analog/Digital)-Wandler zu digitalisieren und hieran eine digitale Verarbeitung anschließen zu lassen. Die Verarbeitung wird durchgeführt, indem die digitalen Werte der analogen Signale über mehrere wiederholte Rücksignaldurchläufe gemittelt werden. Dies verbessert das Signal/Rausch-Verhältnis, weil das erwünschte Signal in jedem Durchlauf gleich ist, während das Rauschen unterschiedlich ist. Andererseits erfordert dieses Verfahren eine leistungsstarke digitale Verarbeitungseinheit. Die Einheit muß schnell arbeiten und beträchtliche Rechenleistung aufweisen zum Mitteln einer entsprechenden Anzahl von Durchläufen. Gleichzeitig muß der A/D-Wandler eine der schnellsten und fortschrittlichsten Ausführungen sein, die erhältlich sind. Diese Lösung bedeutet, daß die angewendete Technologie klar Grenzen setzt dafür, wie effizient das Verfahren ist. Dies wird auch den Einsatz von teuren digitalen Prozessoren und A/D-Wandlern erfordern.

Ein anderes in der Radar-Technologie eingesetzte Verfahren wendet Verzögerungsleitungen an, so daß ein Signal um einen Durchlauf verzögert wird und durch analoges Aufaddieren dieser Signale gemittelt wird. Dieses Verfahren weist eine Begrenzung auf, da die Anzahl der Mittelwertbildungen, die durchgeführt werden können, sehr eingeschränkt ist und es dort keine Synchronisation mit dem (Signal-)Durchlauf gibt.

Die US-Patentschrift 3 706 094 beschreibt einen Empfänger für ein Radar-Überwachungssystem mit niedriger Ausgangsleistung, bei dem der Empfänger ausgerüstet ist zum analogen Verarbeiten der empfangenen, zurücklaufenden Puls-Signale, von denen jedes Puls-Signal aufgeteilt wird durch eine bestimmte Anzahl von zeitlichen Unterbrechungen in gesteuerten Torschaltungen und bei dem das Signal von jeder Torschaltung einem Integrator zugeführt wird für die wiederholte Integration der Puls-Signale, wobei die Wiederholfrequenz der Puls-Signale beachtlich höher ist als die Grenz-Frequenz des Tiefpasses des Integrators. Das Puls-Signal kann durch Auslesen des Ausganges des Integrators vom Empfänger rekonstruiert werden.

Das Hauptziel der vorliegenden Erfindung besteht darin, eine sichere Methode zu entwickeln zum Erkennen eines Radarsignals, welches von einem passiven, kodierten Transponder reflektiert wird unter Phasenmodulation des gesendeten Signals. - Dies kann durch Einsatz des Verfahrens nach Anspruch 1 erreicht werden. Andere Gesichtspunkte der Erfindung sind in den übrigen Patentansprüchen angegeben.

Die vorliegende Erfindung kann von der Technik nach der erwähnten Patentschrift durch die Tatsache unterschieden werden, daß die vorliegende Erfindung ein Zusammenwirken zwischen den gesendeten und reflektierten Signalen anwendet. Dies geschieht durch eine binäre, digitale Zufallssequenz, die das gesendete Signal moduliert, und Anwendung derselben Zufallssequenz zum Wiedererkennen des demodulierten, reflektierten Signals. Es wird eine große Anzahl von phasenmodulierten Pulsfolgen erzeugt, die vorzugsweise unterschiedlich sind. Dies wird erreicht durch Aufteilen der oben erwähnten binären Zufallssequenz und Benutzung dieser Aufteilungen der binären Zufallssequenz, um das demodulierte, reflektierte Signal einem Speichermedium zuzuführen wie einer Integratorkette, die derart beschaffen ist, daß das (Speicher-)Medium Werte entsprechen den erwünschten Signalen enthält, während unerwünschte Signale und Rauschen größtenteils reduziert werden.

Vorteile der Anwendung nach der Erfindung: Die im Rahmen der Erfindung angewendete Technik besteht aus einem analogen Mitteln (Mittelwertbildung) des Signals, bevor es digitalisiert wird.

Dies hat mehrere Vorteile gegenüber traditionellen Techniken. Es kann eine ungemein große Verarbeitungskapazität geschaffen werden nur durch Einsatz von herkömmlichen, kommerziell erhältlichen, kostengünstigen Komponenten. Daraus folgt eine Geschwindigkeit und Fähigkeit zur Mittelwertbildung für wiederholte Durchläufe, die weit hinausgehen über irgendwelche der oben erwähnten traditionellen Methoden. Gleichzeitig bedeutet die niedrigere Auswerterate, daß ein standardmäßiger, konventioneller Typ eines A/D-Wandlers und die darauf folgende digitale Verarbeitung eingesetzt werden kann, so daß dies kommerziell attraktiv ist.

Da eine binäre Sequenz sowohl beim Senden zum Modulieren des gesendeten Signals als auch für den Empfänger zum Steuern der Speicherung und Mittelwertbildung des demodulierten, reflektierten Signals benutzt wird, werden im Vergleich zu den erwünschten Signalen alle Arten von Rauschen und unerwünschten Signalen bedeutend reduziert. Weil die obige binäre Sequenz Teil einer binären Zufallssequenz ist, werden Rauschen und unerwünschte Signale sogar dann größtenteils reduziert, wenn sie Teil eines ungünstigen wiederholten Durchlaufes sind.

Es ist auch möglich, das Senden zu verbessern durch Anwendung phasenmodulierter und vorzugsweise unterschiedlicher Pulsfolgen anstelle eines Einzelpulses, wobei die Länge einer Pulsfolge nach oben zu begrenzt ist durch die Dauer bis zum Eintreffen der ersten reflektierten Pulsfolge.

### Ausführungsbeispiel der Erfindung:

Im folgenden wird ein Ausführungsbeispiel der Erfindung unter Hinweis auf die Zeichnungen beschrieben.
Figur 1 zeigt eine Blockdarstellung einer Möglichkeit der Ausführung der Erfindung mit Einschluß der wesentlichen Komponenten,
Figur 2 zeigt eine detailliertere Wiedergabe des Senders bei dieser besonderen Ausführungsform,
Figur 3 zeigt eine detailliertere Wiedergabe des Empfängers und der Dekodereinheit bei dieser besonderen Ausführungsform, und
Figur 4 zeigt eine chronologische Wiedergabe der gesendeten und reflektierten Signale im Fall dieser Ausführungsform der Erfindung.

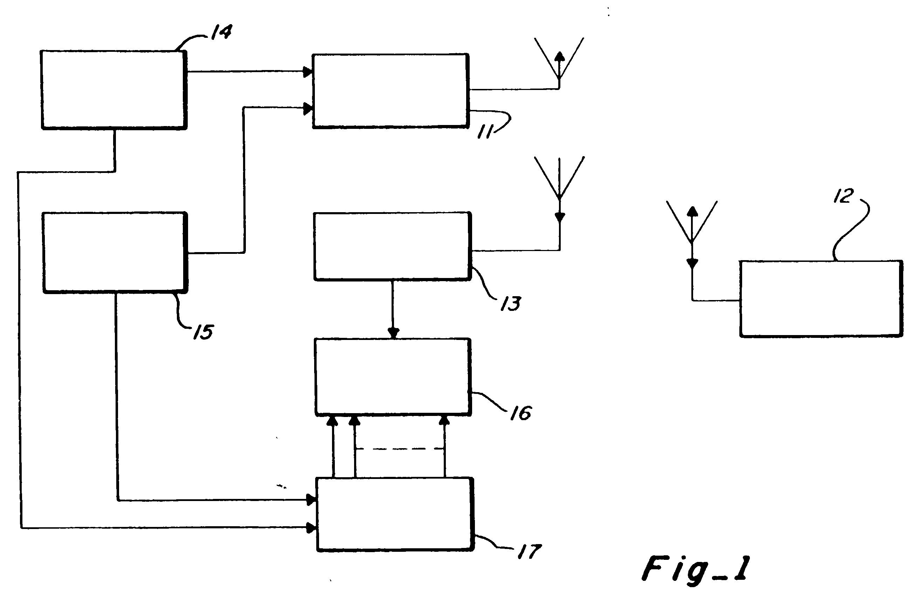

Die Ausführungsform nach Figur 1 besteht aus einem Sender 11, einem Transponder 12, der z.B. ein passiver SAW-Transponder sein könnte, und einem Empfänger 13, der mit einer Integratoranordnung 16 von Integratorabschnitten 37 verbunden ist. Eine Einrichtung 14 erzeugt eine binäre Zufallssequenz, die zu dem Sender 11 und einem Sieberegister 17 geleitet wird, welches mit der Integratoranordnung 16 verbunden ist. Eine Einrichtung 15 gibt ein Signal mit zeitlichen Begrenzungen (Zeitintervallsignal), welches dem Sender 11 und dem Schieberegister 17 zugeführt wird.

### Die Ausführungsform arbeitet wie folgt:

Der Sender 11 sendet eine phasenmodulierte Pulsfolge, die von dem kodierten Transponder 12 empfangen und reflektiert wird, so daß das reflektierte Signal aus Serien von Pulsfolgen und Zwischenräumen ohne Pulsfolgen besteht, welche zusammen eine Identität bilden, die dem Transpondercode gleicht. Das erwünschte Signal wird von dem Empfänger 13 aufgenommen, der es dann demoduliert und an eine Integratoranordnung 16 gibt, die von der oben erwähnten binären Sequenz von der Einreichung 14 her gesteuert wird zusammen mit den zeitlichen, von der Einrichtung 15 bestimmten Unterbrechungen.

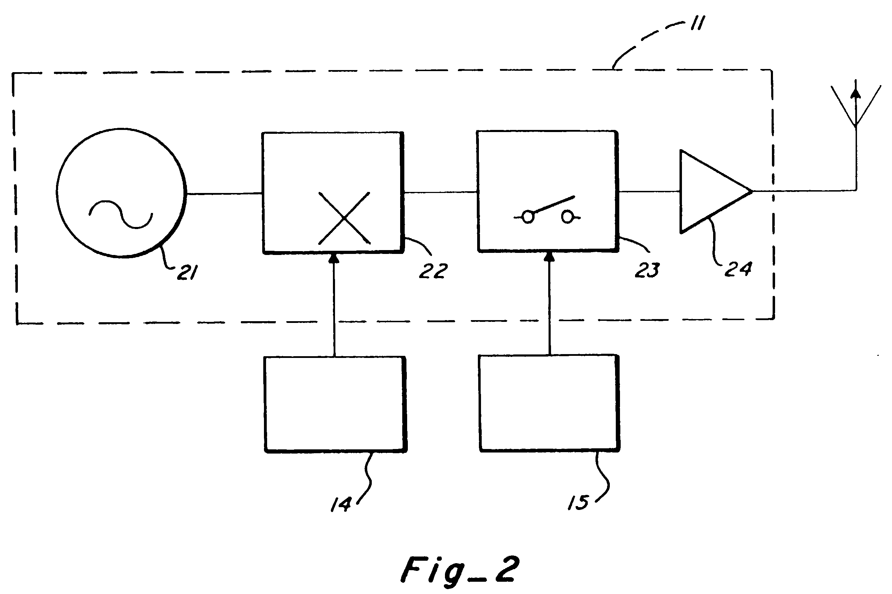

Figur 2 gibt eine detailliertere Wiedergabe des Senders wieder. Dieser besteht aus einem Oszillator 21, der ein Festfrequenzsignal bildet. Dieses Festfrequenzsignal wird phasenmoduliert durch die binäre Zufallssequenz der Einrichtung 14. Das in der Einrichtung 22 modulierte das Signal wird in Pulsfolgen aufgeteilt mittels einer Torschaltung 23, die von dem Zeitintervallsignal der Einrichtung 15 gesteuert wird. Die Pulsfolgen werden dann vor dem Senden von einem Verstärker 24 verstärkt.

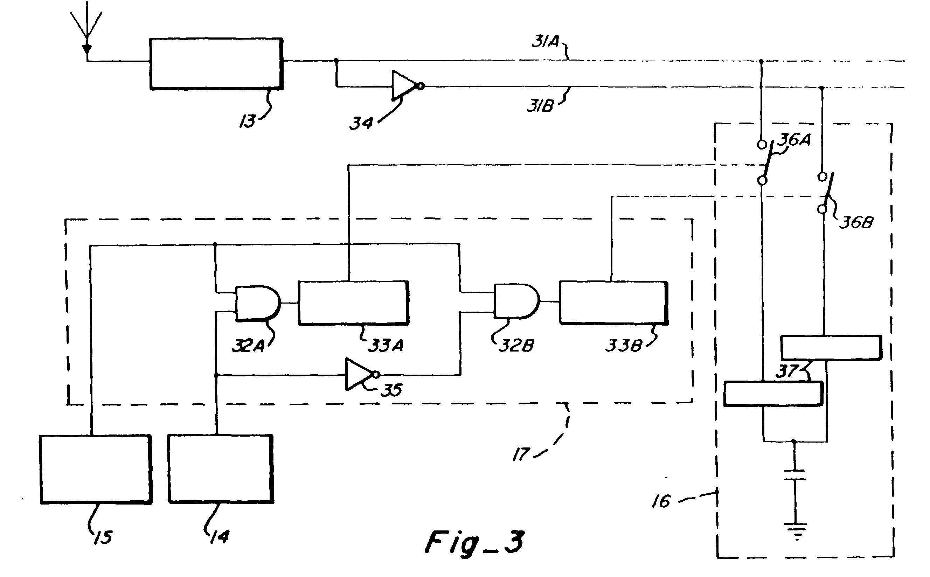

Figur 3 zeigt eine detailliertere Wiedergabe des Empfängers 13 und der Dekodereinheit. Das Signal wird im Empfänger 13 in ein zeit- und phasen-kodiertes Signal 31A demoduliert, welches überlagert ist von unerwünschtem Rauschen. In diesem Beispiel der Erfindung gelangt das Signal 31A zu einem Schalter 36A, der das Signal 31A in einen Integratorabschnitt 37 der Integratoranordnung 16 leitet. Dieser Integratorabschnitt 37 kann z.B. ein RC-Filter sein mit einer großen Zeitkonstante, verglichen mit dem individuellen Signaldurchlauf (z.B. 10000x größer).

Die binäre Sequenz der Einrichtung 14 und das Zeitintervallsignal der Einrichtung 15 bilden die Eingangssignale für ein UND-Gatter 32A, dessen Ausgangssignal zu einem Schieberegister 33A geführt wird, dem dann dieselbe binäre Sequenz zugeführt wird, wie sie im Sender benutzt wird zum Bilden der phasenmodulierten Pulsfolge. Diese binäre Sequenz wird taktgesteuert durch das Schieberegister 33A bewegt unter Verwendung eines äußeren Taktsignals (in der Zeichnung nicht dargestellt). Es ist möglich, ein Signal von verschiedenen Positionen im Schieberegister 33A zu erhalten, z.B. nach bestimmten Zeitintervallen, nachdem das erwähnte Ausgangssignal in das Schieberegister 33A geleitet worden ist. Wenn der Zeitraum verstrichen ist, der der Zeitverzögerung für die erste vom Transponder 12 reflektierte Pulsfolge gleicht, wird das Signal aus dem Schieberegister 33A entfernt und zur Steuerung des Schalters 36A benutzt, welcher für die Weiterleitung des demodulierten Signals 31A vom Empfänger 13 in den Integratorabschnitt 37 öffnet oder schließt.

Das Signal 31A kann mittels eines Inverters 34 invertiert werden zu einem Signal 31B, welches ebenfalls zum Integratorabschnitt 37 geführt wird. Dies wird erreicht durch Leiten der binären Zufallssequenz über einen Inverter 35 zu einem Schieberegister 33B und seiner Entnahme in einer dem ersten Schieberegister 33A entsprechenden Position und Steuerung des Schalters 36B derart, daß dieser für das invertierte Signal 31B in den Integratorabschnitt 37 öffnet oder schließt. Beide Schalter 36A und 36B können z.B. derart gesteuert werden, daß eine logische "1" in der binären Sequenz den Schalter für das nicht-invertierte Signal 31A vom Empfänger öffnet und der Schalter für das invertierte Signal 31B schließt; wenn eine logische "0" in der binären Sequenz erscheint, wird das Gegenteilige geschehen.

In dem Zeitraum, während dessen vom Sender 11 keine Pulsfolgen gesendet werden, weil das Signal der Einrichtung 15 den Wert einer logischen "0" hat, werden die UND-Gatter 32A und 32B immer einer logische "0" an ihrem Ausgang haben, womit sichergestellt ist, daß beide Schalter 36A und 36B offen sind zum Verhindern der Einwirkung von unerwünschtem Rauschen auf den Integratorabschnitt 37.

Die Integratoranordnung 16 wird gebildet von einer Anzahl von Integratorabschnitten 37, die typischerweise der Anzahl der "Bits" oder des Mehrfachen der Anzahl der "Bits" des Transponders 12 gleichen. Die individuellen Integratorabschnitte 37 können immer dann ausgelesen werden, wenn die erforderliche Anzahl von Pulsfolgen verarbeitet worden ist. Dieses Auslesen kann asynchron erfolgen, ohne daß vorangegangenen Geschehnissen irgendeine Beachtung geschenkt werden muß.

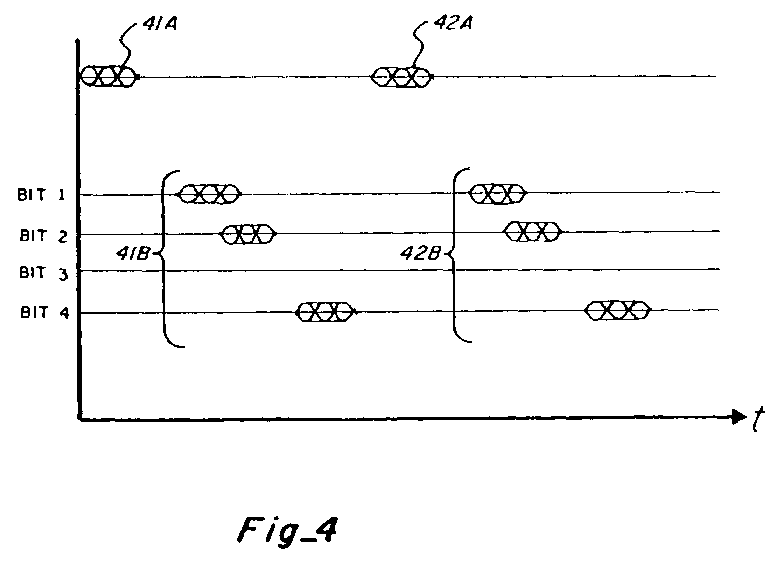

Figur 4 zeigt in chronologischer Wiedergabe, wie zwei Pulsfolgen vom Sender 11 gesendet und vom Transponder 12 reflektiert werden, in einer Ausführungsform, bei der der Transponder 12 eine Auflösung von vier "Bits" hat. Hier ist der Transponder 12 mit der binären Sequenz (Bitsequenz) 1101 kodiert.

Die erste Pulsfolge 41A ist ein phasenmoduliertes Signal, welches durch den ersten Teil einer binären Zufallssequenz der Einrichtung 14 moduliert ist, mit einer Länge, welche durch die von der Einrichtung 15 gebildeten Zeitintervalle bestimmt ist. Die erste Pulsfolge 41A wird vom Transponder 12 empfangen und reflektiert, wo dieser für eine logische "1" kodiert ist. Da der Transponder in diesem Beispiel den Kode 1101 hat, bildet das reflektierte Signal ein Muster, wie es bei 41B gezeigt ist, wo "Bit 1", "Bit 2" und "Bit 4" eine Pulsfolge reflektieren, während "Bit 3", welches den Wert der logischen "0" hat, kein Signal reflektiert. Die reflektierten Pulsfolgen 41B können und werden sich in den verschiedenen gegenseitigen Positionen überlappen, ohne daß dies irgendwelche negativen Konsequenzen auf das Resultat hätte.

Sobald die letzte reflektierte Pulsfolge empfangen worden ist, wird die zweite Pulsfolge gesendet. Diese Pulsfolge wird von einem anderen Teil der binären Zufallssequenz phasenmoduliert, die unterschiedlich zu der in der ersten Pulsfolge ist, und von der Einrichtung 14 aktiviert ist für eine bestimmte Zeitdauer, die durch von der Einrichtung 15 kommende Zeitintervallsignale bestimmt wird. Diese zweite Pulsfolge 42A wird dann wie im ersten Fall vom Transponder 12 reflektiert, so daß eine Reihe reflektierter Pulsfolgen 42B gebildet ist.

Es kann eine große Anzahl von den Pulsfolgen 41a und 42A, jeweils auf unterschiedliche Weise phasenmodulierten, entsprechenden Pulsfolgen gesendet, reflektiert und zu der Integratoranordnung 16 geführt werden, so daß das gewünschte Signal gemittelt wird und unerwünschte Signale, die zufälliger Natur und asynchron sind, größtenteils reduziert werden.

## Patentansprüche

1. Verfahren zum Behandeln von Signalen in einem Identifikationssystem, bei dem
a) von einem Sender ein Radarsignal ausgesendet wird,
b) das Radarsignal von einem beweglichen Transponder empfangen wird,
c) der Transponder ein binär kodiertes Signal zurücksendet, und
d) das vom Transponder zurückgesendete Signal von einem Empfänger empfangen und verarbeitet wird, um unerwünschte Signale und Rauschen von den zurückgesendeten, kodierten und erwünschten Signalen zu trennen,
dadurch gekennzeichnet, daß zum Verbessern der Verarbeitungsqualität, -kapazität und -geschwindigkeit
e) das zum Aussenden als Radarsignal vorgesehene elektrische Signal unter Anwendung einer binären Pseudo-Zufallssequenz phasenmoduliert wird,
f) das phasenmodulierte elektrische Signal unter Bildung von signalfreien Zeitintervallen aufgeteilt wird und die dadurch gebildeten Pulsfolgen (41A, 42A) als Radarsignal ausgesendet werden,
g) ausgesendete Pulsfolgen (41A, 42A) des Radarsignals vom Transponder entprechend dessen binärer Kodierung passiv reflektiert werden,
h) die vom Transponder reflektierten Pulsfolgen (41B, 42B) empfangen und demoduliert werden und dieselbe binäre Pseudo-Zufallssequenz und dieselben Zeitintervalle, wie sie beim Aussenden angewendet wurden, beide zeitverzögert, zum Speichern, Bilden eines Mittelwertes und Erarbeiten der Identifikation des Transponders zum Zweck der individuellen Erkennung benutzt werden, und
i) die aus der Demodulation der reflektierten Pulsfolgen (41B, 42B) erhaltenen Signale (31A, 31B) einem Speichermedium derart zugeführt werden, daß die diskreten Werte der verzögerten binären Pseudo-Zufallssequenz eine Einrichtung (36) steuern, welche für Pulsfolgesignale mit einem gegebenen binären Wert das Speichermedium öffnet und welche das Speichermedium für Pulsfolgesignale schließt, die den dazu inversen Wert haben.

2. Verfahren nach Anspruch 1, dadurch gekennzeichnet, daß die genannte Pulsfolge vorzugsweise für jeden wiederholten Durchlauf unterschiedlich ist.

3. Verfahren nach Anspruch 1, dadurch gekennzeichnet, daß der Transponder (12) die genannten Pulsfolgen (41B, 42B) zu unterschiedlichen Zeitpunkten reflektiert aufgrund unterschiedlicher binärer Kodierungen des Transponders (12).

4. Verfahren nach Anspruch 1, dadurch gekennzeichnet, daß die binäre Zufallssequenz einer Einrichtung (17) zugeführt wird, welche deren Werte zeitlich derart verzögert, daß sie mit der reflektierten, empfangenen und demodulierten Pulsfolge (31A, 31B) synchronisiert sind.

5. Verfahren nach Anspruch 4, dadurch gekennzeichnet, daß den Zeitintervallen und der Pseudo-Zufallssequenz entsprechende Signale vor ihrer Verzögerung eine logische UND-Operation durchlaufen.

6. Verfahren nach Anspruch 1, dadurch gekennzeichnet, daß die aus der Demodulation der reflektierten Pulsfolgen (41B, 42B) erhaltenen Signale invertiert werden (31B) und dem genannten Speichermedium zugeführt werden, invertiert gesteuert durch die Werte des genannten Teils der verzögerten binären Zufallssequenz.

7. Verfahren nach Anspruch 1, dadurch gekennzeichnet, daß die Speicherung durchgeführt wird mit einem Speichermedium, in dem eine Anzahl von Werten gespeichert werden kann, die durch die Anzahl Bits des Transponders (12) gegeben ist oder für ein Mehrfaches dieser Anzahl von Bits.

8. Verfahren nach Anspruch 7, dadurch gekennzeichnet, daß die der Pseudo-Zufallssequenz und den Zeitintervallen entsprechenden Signale zeitlich verzögert werden und zu unterschiedlichen Zeitpunkten zur Steuerung des Speichermediums angewendet werden entsprechend der Kodierung im Transponder oder einem Vielfachen dieser zeitlichen Verzögerungen.

9. Verfahren nach Anspruch 1, dadurch gekennzeichnet, daß das genannte Speichermedium derart beschaffen ist, daß wiederholte Durchläufe der empfangenen, demodulierten und gespeicherten Pulsfolgen gemittelt werden.

10. Einrichtung zum Durchführen des Verfahrens nach den vorhergehenden Ansprüchen zum Behandeln von Signalen in einem Identifikationssystem, mit
a) einem zum Aussenden eines Radarsignals vorgesehenen Sender (11) mit einem Oszillator (21),
b) einem binär kodierten beweglichen Transponder (12) zum Reflektieren des Radarsignals, und
c) einem Empfänger (13) zum Empfangen und Demodulieren des reflektierten Radarsignals,
dadurch gekennzeichnet,
d) daß der Sender (11) außer mit einer Einrichtung (22) zur Phasenmodulation zusätzlich mit einer Einrichtung (14) zum Erzeugen einer binären Zufallssequenz verbunden ist,
e) daß der Sender (11) ferner mit einer Einrichtung (15) verbunden ist zum Aufteilen des phasenmodulierten Signales des Sende (11) in Pulsfolgen (41A, 41B) unter Bildung von signalfreien Zeitintervallen,
f) daß der Transponder (12) individuell binär kodiert ist zum passiven Reflektieren von Pulsfolgen (41B, 42B) mit diesem Kode, und
g) daß empfangsseitig die Einrichtung (14) zum Erzeugen der binären Zufallssequenz und die Einrichtung (15) zum Aufteilen des phasenmodulierten Signales in Pulsfolgen jeweils mit mindestens einem UND-Tor (32) verbunden ist mit jeweils einem Ausgang zu mindestens einem Schieberegister (33), welches zum Steuern einer mit dem Empfänger (13) verbundenen, steuerbaren Integratorschaltung (16) als Speichermedium vorgesehen ist.

11. Einrichtung nach Anspruch 10, dadurch gekennzeichnet, daß ein Inverter (34) vorgesehen ist für das demodulierte Radarsignal und ein weiterer Inverter (35) vorgesehen ist für das zu einem zweiten Schieberegister (33B) geleitete Zeitintervallsignal zum Steuern des demodulierten und invertierten Radarsignals in das Speichermedium.

## Claims

1. Method of processing signals in an identification system, in which:
a) a radar signal is transmitted from a transmitter,
b) the radar signal is received by a mobile transponder,
c) the transponder sends back a binary-coded signal, and
d) the signal sent back by the transponder is received by a receiver and is processed in order to separate unwanted signals and noise from the wanted, binary-coded return signals,
characterised in that, in order to improve the processing quality, capacity and speed
e) the electrical signal for transmission as a radar signal is phase-modulated by the application of a binary pseudo-random sequence,
f) the phase-modulated electrical signal is divided up, with the formation of signal-free time intervals, and the pulse sequences (41A, 42A) thus formed are transmitted as a radar signal,
g) transmitted pulse sequences (41A, 42A) of the radar signal from the transponder are passively reflected in accordance with its binary coding,
h) the pulse sequences (41B, 42B) reflected by the transponder are received and demodulated and the same binary pseudo-random sequence and the same time intervals as are applied in transmitting, both time-delayed, are used for storing and forming an average value and processing the identification of the transponder for the purpose of individual identification, and
i) the signals obtained from the demodulation of the reflected pulse sequences (41B, 42B) are fed to a storage medium in such a manner that the discrete values of the delayed binary pseudo-random sequence operate a device (36) which opens the storage medium to pulse sequence signals with a specified binary value and which closes the storage medium to pulse sequence signals having the inverse value thereto.

2. Method according to claim 1, characterised in that the pulse sequence is preferably different for each repeated cycle.

3. Method according to claim 1, characterised in that the transponder (12) reflects the pulse sequences (41B, 42B) at different instants due to different binary codings of the transponder (12).

4. Method according to claim 1, characterised in that the binary random sequence is fed to a device (17) which temporally delays their values in such a manner that they are synchronised with the reflected, received and demodulated pulse sequence (31A, 31B).

5. Method according to claim 4, characterised in that signals corresponding to the time intervals and the pseudo-random sequence, before being delayed, pass through a logical AND-operation.

6. Method according to claim 1, characterised in that the signals obtained from demodulation of the reflected pulse sequences (41B, 42B) are inverted (31B) and are fed to the storage medium, operated in an inverse manner by the values of the aforesaid part of the delayed binary random sequence.

7. Method according to claim 1, characterised in that storage is carried out with a storage medium in which a number of values can be stored, which number is determined by the number of bits of the transponder (12) or for a multiple of that number or bits.

8. Method according to claim 7, characterised in that the signals corresponding to the pseudo-random sequence and the time intervals are temporally delayed and are applied at different instants in order to operate the storage medium according to the coding in the transponder or to a multiple of these time delays.

9. Method according to claim 1, characterised in that the storage medium is such that repeated cycles of the received, demodulated and stored pulse sequences are averaged.

10. Device for carrying out the method according to the preceding claims for treating signals in an identification system, comprising
a) a transmitter (11) for transmitting a radar signal and comprising an oscillator (21),
b) a binary-coded, mobile transponder (12) for reflecting the radar signal, and
c) a receiver (13) for receiving and demodulating the reflected radar signal,
characterised in that
d) the transmitter (11) is connected not only to a phase-modulating device (22), but also to a device (14) for generating a binary random sequence,
e) the transmitter (11) is further connected to a device (15) for dividing up the phase-modulated signal of the transmitter (11) into pulse sequences (41A, 41B) with the formation of signal-free time intervals,
f) the transponder (12) is individually binary-coded for passively reflecting pulse sequences (41B, 42B) having this code, and
g) on the receiving side, the device (14) for generating the binary random sequence and the device (15) for dividing up the phase-modulated signal into pulse sequences are respectively connected to at least one AND-gate (32) and by a respective output to at least one shift register (33) for controlling an adjustable integrator circuit (16) connected to a receiver (13) and acting as a storage medium.

11. Device according to claim 10, characterised in that an inverter (34) is provided for the demodulated radar signal and a further inverter (35) is provided for the time interval signal, supplied to a second shift register (33B), for guiding the demodulated and inverted radar signal into the storage medium.

## Revendications

1. Procédé pour le traitement de signaux dans un système d'identification, dans lequel
a) un signal radar est envoyé à partir d'un émetteur,
b) le signal radar est reçu par un dispositif émetteur-répondeur (transpondeur),
c) le transpondeur renvoie un signal codé binaire, et
d) le signal renvoyé par le transpondeur est reçu et traité par un récepteur pour séparer les signaux indésirés et le bruit des signaux renvoyés, codés et souhaités,
caractérisé en ce que pour améliorer la qualités de traitement, la vitesse et la capacité
e) le signal électrique prévu pour l'émission sous forme de signal radar est modulé en phases en utilisant une séquence pseudo-aléatoire binaire,
f) le signal électrique modulé en phases est divisé en formant des intervalles temps exempts de signaux et les séquences d'impulsion ainsi formées (41A, 42A) sont émises sous forme de signal radar,
g) les séquences d'impulsion émises (41A, 42A) du signal radar par le transpondeur sont réfléchies passivement en fonction de leur codage binaire,
h) les séquences d'impulsion réfléchies (41B, 42B) par le transpondeur sont reçues et démodulées et l'on utilise la même séquence pseudo-aléatoire binaire et les mêmes intervalles temps que ceux utilisés lors de l'émission, avec une temporisation, pour la mémorisation, la formation d'une valeur moyenne et l'établissement de l'identification du transpondeur en vue de l'identification individuelle, et
i) les signaux (31A, 31B) reçus par la démodulation des séquences d'impulsion réfléchies (41B, 42B) sont amenés à un support de mémoire de telle sorte que les valeurs discrètes de la séquence pseudo-aléatoire binaire temporisée commandent un dispositif (36) qui ouvre la mémoire pour les signaux de séquence d'impulsion ayant une valeur binaire donnée et qui ferme la mémoire pour les signaux de séquence d'impulsion qui ont la valeur inverse.

2. Procédé selon la revendication 1, caractérisé en ce que la séquence d'impulsion citée est de préférence différente pour chaque passage répété.

3. Procédé selon la revendication 1, caractérisé en ce que le transpondeur (12) réfléchit les séquences d'impulsion citées (41B, 42B) en différents points temporels sur la base de codages binaires différents du transpondeur (12).

4. Procédé selon la revendication 1, caractérisé en ce que la séquence aléatoire binaire est amenée à un dispositif (17) qui temporise les valeurs de façon à les synchroniser avec la séquence d'impulsion réfléchie reçue et démodulée (31A, 31B).

5. Procédé selon la revendication 4, caractérisé en ce que les intervalles temps et les signaux correspondants à la séquence pseudo-aléatoire passent avant leur temporisation par une opération logique ET.

6. Procédé selon la revendication 1, caréctérisé en ce que les signaux reçus à partir de le démodulation des séquences d'impulsion réfléchies (41B, 42B) sont inversés (31B) et amenés à la mémoire citée, commandés en inversion par les valeurs de la partie citée de la séquence aléatoire binaire temporisée.

7. Procédé selon la revendication 1, caractérisé en ce que la mémorisation s'effectue à l'aide d'une mémoire dans laquelle on peut stocker un certain nombre de valeurs, nombre qui est donné par le nombre d'éléments binaires du transpondeur (12) ou pour un multiple de ce nombre d'éléments binaires.

8. Procédé selon la revendication 7, caractérisé en ce que les signaux correspondant à la séquence pseudo-aléatoire et aux intervalles temps sont temporisés et utilisés à différents moments pour la commande de la mémoire selon le codage dans le transpondeur ou un multiple de ces temporisations temporelles.

9. Procédé selon la revendication 1, caractérisé ce que en la mémoire citée est conçue de telle sorte que les passages répétés des séquences d'impulsion reçues démodulées et mémorisées sont mis en moyenne.

10. Dispositif pour la réalisation du procédé selon les revendications précédentes pour le traitement de signaux dans un système d'identification avec :
a) un émetteur prévu pour l'émission d'un signal radar (11) avec un oscillateur (21),
b) un transpondeur mobile codé binaire (12) pour réfléchir le signal radar, et
c) un récepteur (13) destiné à recevoir et à démoduler le signal radar réfléchi,
caractérisé en ce que
d) l'émetteur (11) est relié extérieurement avec un dispositif (22) pour la modulation en phases de plus avec un dispositif (14) pour la production d'une séquence aléatoire binaire,
e) en ce que l'émetteur (11) est de plus relié à un dispositif (15) pour la division du signal modulé en phase de l'émetteur (11) en séquences d'impulsion (41A, 41B) en formant des intervalles temps exempts de signaux,
f) en ce que le transpondeur (12) est codé binaire individuellement pour réfléchir passivement les séquences d'impulsion (41B, 42B) avec ce code, et
g) en ce que sur le côté réception, le dispositif (14) est prévu pour la production de la séquence aléatoire binaire et le dispositif (15) est prévu pour la division du signal modulé en phases dans les séquences d'impulsion chaque fois avec au moins une porte ET (32) et avec chaque fois une sortie sur au moins un registre à décalage (33) qui est prévu pour commander un circuit intégrateur (16) commandable relié au récepteur (13), circuit intégrateur (16) servant de mémoire.

11. Dispositif selon la revendication 10, caractérisé en ce qu'il est prévu un inverseur (34) pour le signal radar démodulé et un autre inverseur (35) pour le signal d'intervalle temps mené à un deuxième registre à décalage (33B) pour commander le signal radar démodulé et inversé dans la mémoire.
